# EUROPÄISCHE PATENTSCHRIFT

(11) **EP 3 211 363 B1**
(45) Veröffentlichungstag und Bekanntmachung des Hinweises auf die Patenterteilung: **12.02.2020**
(21) Anmeldenummer: 17161057.9
(22) Anmeldetag: 18.12.2012
(51) Int. Cl.: G01B 7/02, G07C 9/00, E05F 15/73

(54) **STEUERSYSTEM ZUR ANSTEUERUNG EINES MOTORISCHEN VERSCHLUSSELEMENTS EINES KRAFTFAHRZEUGS UND ENTSPRECHENDES BETRIEBSVERFAHREN**
SYSTEM FOR CONTROLLING A MOTORISED CLOSURE ELEMENT OF A MOTOR VEHICLE AND CORRESPONDING OPERATING METHOD
SYSTÈME DE COMMANDE D'UN ÉLÉMENT DE FERMETURE MOTORISÉ D'UN VÉHICULE À MOTEUR ET PROCÉDÉ DE FONCTIONNEMENT CORRESPONDANT

(30) Priorität: 21.12.2011 DE 102011121775
(43) Veröffentlichungstag der Anmeldung: 30.08.2017
(62) Teilanmeldung aus: 12826643.4
(73) Patentinhaber: Brose Fahrzeugteile GmbH & Co. Kommanditgesellschaft, Bamberg, 96052 Bamberg (DE)
(72) Erfinder: Gunreben, Andre, 96103 Hallstadt (DE); Würstlein, Holger, 97475 Zeil am Main (DE); Mönch, Henning, 96450 Coburg (DE); Kuhnen, Thorsten, 96123 Litzendorf (DE); Troeger, James, Fletcher, NC 28732 (US)
(74) Vertreter: Gottschald, Jan

(56) Entgegenhaltungen:
- WO-A1-2013/034252
- DE-A1-102009 017 404
- DE-A1-102010 002 559
- GB-A- 2 376 075

## Beschreibung

Die Erfindung betrifft ein Steuersystem zur Ansteuerung eines motorischen Verschlusselements eines Kraftfahrzeugs gemäß dem Oberbegriff von Anspruch 1, ein Kraftfahrzeug mit einem solchen Steuersystem gemäß Anspruch 11 sowie ein Verfahren für den Betrieb eines solchen Steuersystems gemäß Anspruch 12.

Die heutigen Kraftfahrzeuge sind zunehmend mit motorisch betätigbaren Verschlusselementen ausgestattet. Bei solchen Verschlusselementen kann es sich beispielsweise um Türen wie Seiten- und Hecktüren, insbesondere Schiebetüren, Klappen, insbesondere Heckklappen, Heckdeckel, Motorhauben, Laderaumböden o. dgl. eines Kraftfahrzeugs handeln. Insoweit ist der Begriff "Verschlusselement" vorliegend weit zu verstehen.

Eine Komfortfunktion, der heute zunehmende Bedeutung zukommt, ist die automatische Betätigung der motorischen Heckklappe eines Kraftfahrzeugs. Bei dem bekannten Steuersystem (DE 20 2005 020 140 U1), von dem die Erfindung ausgeht, ist es vorgesehen, dass ein bedienerseitiges Bedienereignis, hier eine bedienerseitige Fußbewegung, das motorische Öffnen der Heckklappe bewirkt.

Hierfür sind eine der Heckklappe zugeordnete Antriebsanordnung, eine Sensorsteuerung sowie ein Abstandssensor vorgesehen. Die Sensorsteuerung überwacht die Sensorsignale daraufhin, ob das obige Bedienereignis vorliegt. In Abhängigkeit vom Ergebnis dieser Bedienereignisüberwachung wird entsprechend eine Ansteuerung der Antriebsanordnung vorgenommen.

Zur Erfassung der obigen Bedienereignisse können kapazitive Abstandssensoren Einsatz finden, die mit mindestens einer Messelektrode ausgestattet sind. Ein Bedienereignis löst hier eine Kapazitätsänderung der Elektrodenanordnung aus, die sich leicht elektronisch erfassen lässt. Eine solche Messelektrode ist regelmäßig in die Heckschürze eines Kraftfahrzeugs integriert und erstreckt sich über die gesamte Breite des Kraftfahrzeugs.

Ein weiteres Steuersystem zur Erfassung eines Bedienereignisses zur Ausführung eines Schließ- oder Öffnungsvorgangs ist aus der DE 10 2010 002 559 A1 bekannt. Dieses sieht zwei Abstandssensoren vor, wobei der erste Abstandssensor ein Eindringen eines Objektes in den Erfassungsbereich detektiert und der zweite Abstandssensor die Lage bzw. das Bewegungsmuster des Objektes erfasst. Ändert das Objekt seine Lage nicht, so wird hier der Schließ- oder Öffnungsvorgang ausgelöst.

Die nachveröffentlichte WO 2013/034252 A1 zeigt ein Steuersystem zur Betätigung der motorischen Heckklappe mit einem schlaufenartig angeordneten Sensor.

Schwierigkeiten können sich ergeben, wenn Kraftfahrzeugkomponenten, insbesondere Anbauteile, die sensorische Erfassung der Bedienereignisse stören oder der Messelektrode schlicht im Weg sind. Bei solchen Kraftfahrzeugkomponenten kann es sich um Anhängerkupplungen, Fahrradständer, Abgasanlagen o. dgl. handeln.

Der Erfindung liegt das Problem zugrunde, das bekannte Steuersystem derart auszugestalten und weiterzubilden, dass eine eventuelle Störung der sensorischen Erfassung von Bedienereignissen durch bestimmte Fahrzeugkomponenten vermieden wird.

Das obige Problem wird bei einem Steuersystem gemäß dem Oberbegriff von Anspruch 1 durch die Merkmale des kennzeichnenden Teils von Anspruch 1 gelöst.

Vorschlagsgemäß ist erkannt worden, dass der mindestens eine Abstandssensor des Steuersystems konstruktiv so ausgelegt werden kann, dass sein Sensorbetrieb durch die an sich störende Fahrzeugkomponente nicht oder nur geringfügig beeinträchtigt wird.

Im Einzelnen weist der Abstandssensor im Bereich der Fahrzeugkomponente einen Blindabschnitt auf, der keine Sensitivität oder verglichen mit dem an den Blindabschnitt angrenzenden Bereich des Abstandssensors eine geringere Sensitivität aufweist.

Der Begriff "Sensitivität" ist hier in einem erweiterten Sinne derart zu verstehen, dass eine Änderung der Sensitivität bei identischem Abstand zu dem Benutzer stets eine entsprechende Änderung des Sensorsignals mit sich bringt. Die Formulierung "keine Sensitivität" bedeutet im obigen Sinne, dass im Blindabschnitt überhaupt keine sensorische Erfassung stattfindet.

Der Begriff "Blindabschnitt" ist ebenfalls in einem erweiterten Sinne zu verstehen. Er umfaßt wie oben angedeutet nicht nur einen Abschnitt ganz ohne Sensitivität, also ohne sensorische Erfassung, sondern auch einen Abschnitt mit vergleichsweise geringer Sensitivität.

Die vorschlagsgemäße Lösung gewährleistet eine hohe Robustheit gegenüber einer eventuellen Sensorstörung durch die betreffende Fahrzeugkomponente und lässt sich auf denkbar einfache Weise realisieren.

Gemäß Anspruch 2 ist der Abstandssensor mit einem der Fahrzeugkomponente zugeordneten Blindabschnitt ausgestattet, der so ausgelegt ist, dass die Fahrzeugkomponente durch den Abstandssensor nicht erfassbar ist und entsprechend keine Störung der sensorischen Erfassung des Abstands zu einem Benutzer verursacht.

Bei der weiter bevorzugten Ausgestaltung gemäß Anspruch 6 ist es so, dass der Blindabschnitt eine den Bereich der Fahrzeugkomponente im Hinblick auf die sensorische Erfassung abschirmende Abschirmung aufweist. Eine solche Abschirmung kann grundsätzlich die obige Reduzierung der Sensitivität bewirken.

Vorschlagsgemäß ist ferner das konstruktiv leicht zu realisierende Merkmal vorgesehen, dass der Blindabschnitt eine Unterbrechung des Abstandssensors entlang der Sensorerstreckung ist, so dass beidseits der Fahrzeugkomponente ein Sensormodul angeordnet ist. Diese Unterbrechung des Abstandssensors ist insofern besonders vorteilhaft, als die Fahrzeugkomponente ohne weiteres innerhalb des Blindabschnitts untergebracht werden kann, ohne dass sich konstruktive Überschneidungen zwischen Fahrzeugkomponente und Abstandssensor ergeben.

Nach einer weiteren Lehre gemäß Anspruch 11, der eigenständige Bedeutung zukommt, wird ein Kraftfahrzeug mit einem motorischen Verschlusselement, vorzugsweise mit einer motorischen Heckklappe, einer motorischen Seitentür, einer motorischen Schiebetür o. dgl., beansprucht, das mit einem obigen, vorschlagsgemäßen Steuersystem ausgestattet ist. Auf alle Ausführungen, die geeignet sind, das vorschlagsgemäße Kraftfahrzeug zu beschreiben, darf verwiesen werden.

Nach einer weiteren Lehre gemäß Anspruch 12, der ebenfalls eigenständige Bedeutung zukommt, wird ein Verfahren für den Betrieb eines vorschlagsgemäßen Steuersystems beansprucht.

Wesentlich nach dieser weiteren Lehre ist, dass eine Benutzer-Längsbewegung entlang der Sensorerstreckung des mindestens eines Abstandssensors durch dessen Blindabschnitt ein Muster im zeitlichen Sensorsignalverlauf ergibt, das von dem Steuersystem zumindest als Teil eines Bedienereignisses erfasst wird. Im Einzelnen lässt sich dann nicht nur ein Abstand zu einem Benutzer, sondern eine Bewegungsrichtung des Benutzers entlang der Sensorerstreckung, erfassen. Insoweit darf auf alle Ausführungen zu dem vorschlagsgemäßen Steuersystem verwiesen werden.

Im Folgenden wird die Erfindung anhand einer lediglich ein Ausführungsbeispiel darstellenden Zeichnung näher erläutert. In der Zeichnung zeigt
- Fig. 1: den Heckbereich eines Kraftfahrzeugs mit einem vorschlagsgemäßen Steuersystem zur Durchführung des vorschlagsgemäßen Verfahrens und
- Fig. 2: in ganz schematischer Darstellung die Heckschürze des Heckbereichs gemäß Fig. 1 in einer stirnseitigen Ansicht a) mit einem ersten vorschlagsgemäßen Steuersystem, b) mit einem zweiten vorschlagsgemäßen Steuersystem und c) mit einem dritten vorschlagsgemäßen Steuersystem.

Das vorschlagsgemäße Steuersystem wird im Folgenden anhand eines motorischen Verschlusselements 1 eines Kraftfahrzeugs erläutert, das als Heckklappe ausgestaltet ist.

Die Ausgestaltung des Verschlusselements 1 als Heckklappe eines Kraftfahrzeugs ist vorliegend bevorzugt. Allerdings darf im Hinblick auf das weite Verständnis des Begriffs "Verschlusselement" auf den einleitenden Teil der Beschreibung verwiesen werden. Insoweit gelten alle Ausführungen zu einer Heccklappe 1 entsprechend für alle anderen Arten von Verschlusselementen.

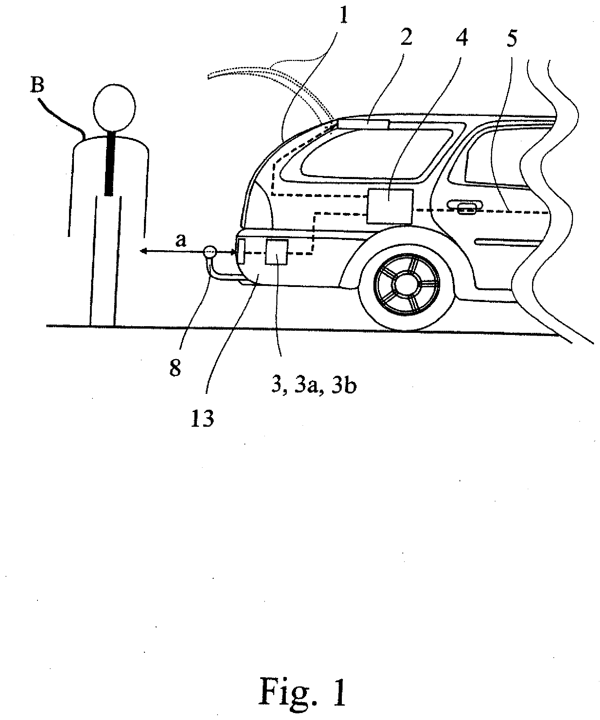

Der Heckklappe 1 ist eine Antriebsanordnung 2 zugeordnet, mittels der eine motorische Verstellung der Heckklappe 1 zwischen der in Fig. 1 in durchgezogener Linie dargestellten Schließstellung und der in Fig. 1 in gestrichelter Linie dargestellten Offenstellung bewirkbar ist.

Es ist ferner mindestens eine Sensorsteuerung 3 vorgesehen, die der Erfassung von Bedienereignissen und darauf basierend der Ansteuerung der motorischen Heckklappe 1 dient. Hier und vorzugsweise ist der mindestens einen Sensorsteuerung 3 ein übergeordnetes Heckklappensteuergerät 4 zugeordnet, das über ein Bussystem 5 mit einer zentralen Fahrzeugsteuerung o. dgl. kommuniziert. Vorzugsweise erfolgt die eigentliche Extraktion von Bedienereignissen aus den Sensorsignalen, insbesondere eine entsprechende Mustererkennung, in dem Heckklappensteuergerät 4. Denkbar ist aber auch, dass dies zumindest teilweise, insbesondere im Sinne einer Signal-Vorverarbeitung, in der mindestens einen Sensorsteuerung 3 erfolgt.

Die auszuwertenden Sensorsignale gehen zurück auf mindestens einen länglichen Abstandssensor 6, 7, hier auf genau zwei längliche, parallel zueinander verlaufende Abstandssensoren 6, 7, die sich jeweils entlang einer Sensorerstreckung erstrecken. Die Sensorerstreckung kann gerade, gebogen, kreisförmig o. dgl. sein.

Hier und vorzugsweise sind genau zwei Abstandssensoren 6, 7 vorgesehen, die sich wie oben angedeutet im Wesentlichen parallel zueinander erstrecken. Grundsätzlich ist es auch denkbar, dass mehr als zwei längliche Abstandssensoren 6, 7 vorgesehen sind. Vorliegend ist stellenweise von nur einem einzigen Abstandssensor 6, 7 die Rede, was der Vereinfachung dienen soll. Alle diesbezüglichen Ausführungen gelten für den jeweils zweiten Abstandssensor 6, 7 entsprechend.

Der mindestens einen Sensorsteuerung 3 kommt wie oben angedeutet, die Aufgabe zu, den zugeordneten Abstandssensor 6, 7 anzusteuern und/oder dessen Sensorsignale auszuwerten. Der mindestens eine Abstandssensor 6, 7 ist so ausgelegt, dass sich mit ihm ein Abstand a zu einem Benutzer B erfassen lässt.

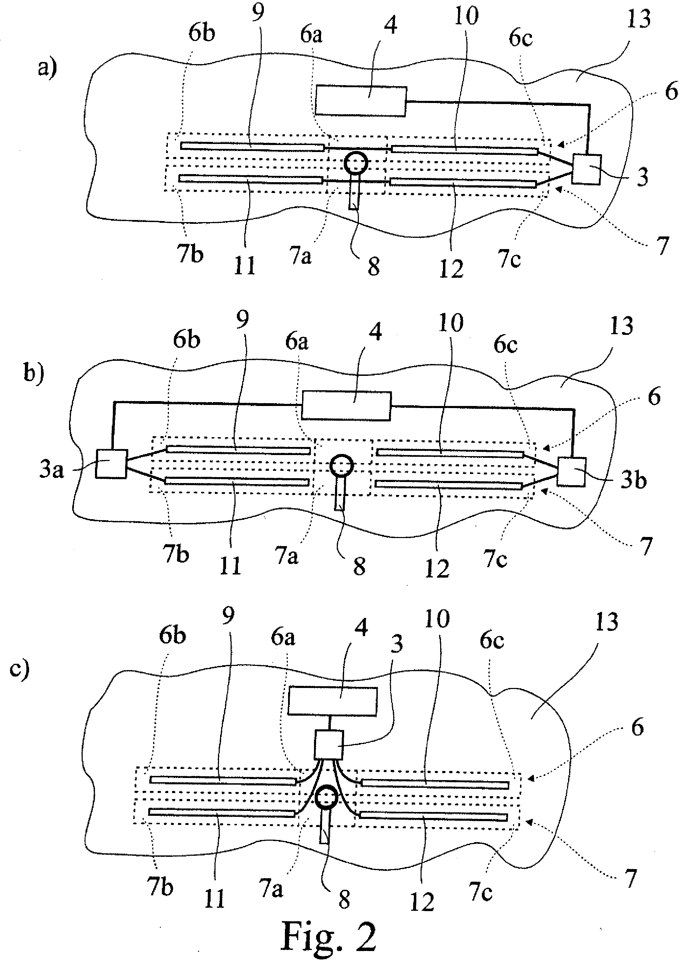

Eine Zusammenschau der Fig. 1 und 2 zeigt, dass bei installiertem Steuersystem eine Fahrzeugkomponente 8, hier eine Anhängerkupplung 8, in der Sensorerstreckung angeordnet bzw. anordnenbar ist. Mit "anordnenbar" ist gemeint, dass sich die Fahrzeugkomponente 8, hier die Anhängerkupplung, in der Regel abnehmen lässt. Andere Fahrzeugkomponenten sind in diesem Zusammenhang denkbar. Beispiele hierfür sind Fahrradträger, Abgasanlagen o. dgl..

Fig. 2 lässt vermuten, dass bei bestimmter Auslegung des mindestens einen Abstandssensors 6, 7 die Fahrzeugkomponente 8 durch den Abstandssensor 6, 7 erfassbar wäre, was die sensorische Erfassung des Abstands a zu einem Benutzer B stören würde. Dies wäre insbesondere der Fall, wenn sich der Abstandssensor 6, 7 homogen über die gesamte Fahrzeugbreite erstrecken würde.

Hier und vorzugsweise ist der mindestens eine Abstandssensor 6, 7 jedoch so ausgelegt, dass er im Bereich der Fahrzeugkomponente 8 einen Blindabschnitt 6a, 7a aufweist, der keine Sensitivität aufweist. Dies ist durch eine Unterbrechung des Abstandsensors 6, 7 im Bereich der Fahrzeugkomponente 8 realisiert, wie noch erläutert wird. Grundsätzlich ist es aber auch denkbar, dass der Blindabschnitt 6a, 7a verglichen mit dem an den Blindabschnitt 6a, 7a angrenzenden Bereich des Abstandssensors 6, 7 eine geringere Sensitivität aufweist, wie ebenfalls noch erläutert wird. In jedem Fall wird damit der störende Einfluß der Fahrzeugkomponente 8 auf den Sensorbetrieb reduziert.

In einer bevorzugten Variante ist der mindestens eine Abstandssensor 6, 7, so ausgelegt, dass er einen der Fahrzeugkomponente 8 zugeordneten Blindabschnitt 6a, 7a aufweist und dadurch die Fahrzeugkomponente 8 durch den Abstandssensor 6, 7 nicht erfassbar ist. Entsprechend kann die Fahrzeugkomponente 8 auch keine Störung der sensorischen Erfassung des Abstands a zu einem Benutzer B verursachen. Den Blindabschnitt 6a, 7a sorgt dafür, dass der störende Einfluss der Fahrzeugkomponente 8 auf das jeweilige Messergebnis gewissermaßen ausge-blendet wird. Die Angaben "nicht erfassbar" und "keine Störung" sind vorliegend im Hinblick auf die relativ rauhen Meßbedingungen nicht in einem idealen Sinne, sondern so zu verstehen, dass bei dieser Variante die Fahrzeugkomponente 8 durch den Blindabschnitt keine spürbare Auswirkung auf den Sensorbetrieb hat.

Die dargestellte Ausgestaltung des Abstandssensors 6, 7 als kapazitiver Sensor hat sich in der Praxis bewährt. Vorteilhaft kann aber auch die Anwendung eines induktiven Sensors sein. Grundsätzlich sind auch andere Sensorprinzipien anwendbar. Denkbar ist beispielsweise, dass es sich bei dem Abstandssensor 6, 7 um einen magnetischen Sensor handelt.

Dem kapazitiven Abstandssensor 6, 7 ist eine längliche Messelektrode 9, 10; 11, 12 zugeordnet, die sich entlang der jeweiligen Sensorerstreckung erstreckt.

Fig. 2 zeigt, dass der Blindabschnitt 6a, 7a hier und vorzugsweise als Unterbrechung des Abstandssensors 6, 7 ausgestaltet ist. Ganz allgemein beträgt die Ausdehnung des Blindabschnitts 6a, 7a entlang der Sensorerstreckung mindestens 5 %, und insbesondere mindestens 10 % der Gesamtlänge des Abstandssensors 6, 7. Grundsätzlich ist eine weitaus größere Ausdehnung des Blindabschnitts 6a, 7a denkbar, beispielsweise, wenn es sich bei der betreffenden Fahrzeugkomponente 8 um einen Fahrradträger o. dgl. handelt. Die Auslegung, insbesondere die Ausdehnung des Blindabschnitts 6a, 7a ist wie weiter oben angedeutet vorzugsweise so getroffen, dass der Einfluss der betreffenden Fahrzeugkomponente 8 auf das Messergebnis nicht mehr nennenswert ist.

Bei einer einfach zu realisierenden Ausgestaltung weist der Blindabschnitt 6a, 7a eine den Bereich der Fahrzeugkomponente 8 im Hinblick auf die sensorische Erfassung abschirmende Abschirmung auf. Dies kann beispielsweise durch eine Art Metallschirm, eine metallische Ummantelung o. dgl. vorgesehen sein.

Bei der vorschlagsgemäßen Lösung ist es allerdings so, dass der Blindabschnitt 6a, 7a eine obige Unterbrechung des Abstandssensors 6, 7 entlang der Sensorerstreckung ist, so dass beidseits der Fahrzeugkomponente 8 ein Sensormodul 6b, 6c; 7b, 7c angeordnet ist. Den Sensormodulen 6b, 6c, 7b, 7c sind jeweils eine Messelektrode 9, 10, 11, 12 zugeordnet, die sich der Darstellung gemäß Fig. 2 entnehmen lässt.

Der Ansteuerung der Sensormodule 6b, 6c, 7b, 7c kommt vorliegend ganz besondere Bedeutung zu.

In einer besonders einfachen Variante sind die beidseits der Fahrzeugkomponente 8 angeordneten Sensormodule 6b, 6b; 7b, 7c eines Abstandssensors 6, 7 elektrisch miteinander kontaktiert. Dies bedeutet, dass die Messelektroden 9, 10 und die Messelektroden 11, 12 elektrisch miteinander kontaktiert sind, wie der Darstellung gemäß Fig. 2a) zu entnehmen ist. Dabei ist den beiden Abstandssensoren 6, 7 eine gemeinsame Sensorsteuerung 3 zugeordnet, die entweder eine parallele Ansteuerung der beiden Abstandssensoren 6, 7 oder eine abwechselnde Ansteuerung der beiden Abstandssensoren 6, 7 ermöglicht.

Denkbar ist aber auch, dass den beidseits der Fahrzeugkomponente 8 angeordneten Sensormodulen 6b, 6c; 7b, 7c eines Abstandssensors 6, 7 jeweils eine separate Sensorsteuerung zugeordnet ist. Beispielsweise kann jeder Messelektrode 9, 10, 11, 12 eine eigene Sensorsteuerung 3 zugeordnet sein. Denkbar ist aber auch, dass den beidseits der Fahrzeugkomponente 8 angeordneten Sensormodulen 6b, 6c; 7b, 7c eines Abstandssensors 6, 7 eine gemeinsame Sensorsteuerung 3 zugeordnet ist.

Bei der in Fig. 2b) dargestellten und insoweit bevorzugten Ausgestaltung ist den auf einer Seite der Fahrzeugkomponente 8 angeordneten Sensormodulen 6b, 7b; 6c, 7c der mindestens zwei Abstandssensoren 6, 7 eine gemeinsame Sensorsteuerung 3a, 3b zugeordnet.

Denkbar ist schließlich, dass alle Messelektroden, 9, 10, 11, 12 der Abstandssensoren 6, 7 separat an eine Sensorsteuerung 3 angeschlossen sind. Das ist in Fig. 2c) dargestellt.

Je nach Steuerungsstruktur können die Messelektroden 9, 10, 11, 12 zumindest zum Teil über Steckverbindungen elektrisch verbunden sein, bevor der Anschluss an die Sensorsteuerung 3 erfolgt. Denkbar ist auch, wie in der Zeichnung dargestellt, dass jede Messelektrode 9, 10, 11, 12 einzeln an die jeweilige Sensorsteuerung 3 angeschlossen ist.

Dadurch, dass die Abstandssensoren 6, 7 entlang deren Sensorerstreckung nicht homogen sind, sondern mit dem Blindabschnitt 6a, 7a, versehen worden sind, wirkt sich eine Benutzer-Längsbewegung entlang der Sensorerstreckung auf die Messergebnisse aus. Dies lässt sich bei der Erfassung der Bedienereignisse nutzen, wie noch erläutert wird.

Das dargestellte Kraftfahrzeug ist mit einem Karosseriebauteil 13 ausgestattet, bei dem es sich beispielsweise um eine Front-/Heck- oder Seitenschürze handeln kann. Die Abstandssensoren 6, 7 sind im montierten Zustand in oder hinter dem Karosseriebauteil 13 angeordnet. Bei dem hier dargestellten, als Heckschürze ausgestalteten Karosseriebauteil 13 erstreckt sich der Abstandssensor 6, 7 vorzugsweise mindestens über die wesentliche Breite des Karosseriebauteils 13.

Wie oben erläutert, kann die vorschlagsgemäße Lösung auf alle Arten von Verschlusselementen 1 angewendet werden. Auch können mit der vorschlagsgemäßen Lösung alle Arten von Benutzerbewegungen erfasst werden.

Nach einer weiteren Lehre, der eigenständige Bedeutung zukommt, wird ein Kraftfahrzeug mit einem motorischen Verschlusselement 1, insbesondere mit einer motorischen Heckklappe, einer motorischen Seitentür, einer motorischen Schiebetür o. dgl. beansprucht, das mit einem vorschlagsgemäßen Steuersystem zur Ansteuerung des motorischen Verschlusselements 1 ausgestattet ist. Auf alle Ausführungen zu dem vorschlagsgemäßen Steuersystem darf verwiesen werden.

Nach einer weiteren Lehre, der ebenfalls eigenständige Bedeutung zukommt, wird ein Verfahren für den Betrieb des vorschlagsgemäßen Steuersystems beansprucht. Wesentlich bei dem Verfahren ist, dass eine Benutzer-Längsbewegung entlang der Sensorerstreckung des mindestens einen Abstandssensors 6, 7 durch dessen Blindabschnitt 6a, 7a ein Muster im zeitlichen Sensorsignalverlauf ergibt, das von dem Steuersystem zumindest als Teil eines Bedienereignisses erfasst wird.

In einer bevorzugten Variante, die sich am besten mit der Ausgestaltung gemäß Fig. 2a) realisieren lässt, führt die Benutzer-Längsbewegung zu einer sprunghaften Signaländerung, sobald der Benutzer die Fahrzeugkomponente 8 passiert. Dieser sprunghaften Änderung kommt eine gewisse Charakteristik zu, die im Rahmen der Erfassung von Bedienereignissen berücksichtigt wird.

Die weiter bevorzugten Varianten gemäß Fig. 2b) und c) ermöglichen es sogar, eine Bewegungsrichtung in der Benutzer-Längsbewegung zu erkennen, da die jeweiligen Messelektroden 9, 10, 11, 12 zumindest zum Teil separat angesteuert werden. Die Bewegungsrichtung in der Benutzer-Längsbewegung lässt sich ebenfalls vorteilhaft bei der Erfassung von Bedienereignissen nutzen.

## Patentansprüche

1. Steuersystem zur Ansteuerung eines motorischen Verschlusselements (1) eines Kraftfahrzeugs, wobei zur Erfassung von Bedienereignissen mindestens eine Sensorsteuerung (3) und mindestens ein länglicher, sich entlang einer Sensorerstreckung erstreckender Abstandssensor (6, 7) vorgesehen sind, wobei die Sensorsteuerung (3) den zugeordneten Abstandssensor (6, 7) ansteuert und/oder dessen Sensorsignale auswertet und wobei der Abstandssensor (6, 7) einen Abstand (a) zu einem Benutzer (B) erfasst,
**dadurch gekennzeichnet,**
**dass** bei installiertem Steuersystem eine Fahrzeugkomponente (8) in oder entlang der Sensorerstreckung, insbesondere eine Anhängerkupplung o. dgl., angeordnet oder anordenbar ist, dass der Abstandssensor (6, 7) so ausgelegt ist, dass er im Bereich der Fahrzeugkomponente (8) einen Blindabschnitt (6a, 7a) aufweist, der keine Sensitivität oder verglichen mit dem an den Blindabschnitt (6a, 7a) angrenzenden Bereich des Abstandssensors (6, 7) eine geringere Sensitivität aufweist und dass der Blindabschnitt (6a, 7a) eine Unterbrechung des Abstandssensors (6, 7) entlang der Sensorerstreckung ist, so dass beidseits der Fahrzeugkomponente (8) ein Sensormodul (6b, 6c, 7b, 7c) angeordnet ist.

2. Steuersystem nach Anspruch 1, **dadurch gekennzeichnet, dass** wegen des Blindabschnitts (6a, 7a) die Fahrzeugkomponente (8) durch den Abstandssensor (6, 7) nicht erfassbar ist und keine Störung der sensorischen Erfassung des Abstands (a) zu einem Benutzer (B) verursacht.

3. Steuersystem nach Anspruch 1 oder 2, **dadurch gekennzeichnet, dass** mindestens zwei längliche Abstandssensoren (6, 7) vorgesehen sind, die sich im Wesentlichen parallel zueinander erstrecken.

4. Steuersystem nach einem der vorhergehenden Ansprüche, **dadurch gekennzeichnet, dass** der mindestens eine Abstandssensor (6, 7) als kapazitiver Sensor mit einer länglichen Meßelektrode (9-12) ausgestaltet ist.

5. Steuersystem nach einem der vorhergehenden Ansprüche, **dadurch gekennzeichnet, dass** die Ausdehnung des Blindabschnitts (6a, 7a) entlang der Sensorerstreckung mindestens 5%, vorzugsweise mindestens 10% der Gesamtlänge des Abstandssensors (6, 7) beträgt.

6. Steuersystem nach einem der vorhergehenden Ansprüche, **dadurch gekennzeichnet, dass** der Blindabschnitt (6a, 7b) eine den Bereich der Fahrzeugkomponente (8) im Hinblick auf die sensorische Erfassung abschirmende Abschirmung aufweist.

7. Steuersystem nach einem der vorhergehenden Ansprüche, **dadurch gekennzeichnet, dass** die beidseits der Fahrzeugkomponente (8) angeordneten Sensormodule (6b, 6c, 7b, 7c) eines Abstandssensors (6, 7) elektrisch miteinander kontaktiert sind.

8. Steuersystem nach einem der vorhergehenden Ansprüche, **dadurch gekennzeichnet, dass** den beidseits der Fahrzeugkomponente (8) angeordneten Sensormodulen (6b, 6c, 7b, 7c) eines Abstandssensors (6, 7) jeweils eine separate Sensorsteuerung (3) zugeordnet ist, oder, dass den beidseits der Fahrzeugkomponente (8) angeordneten Sensormodulen (6b, 6c, 7b, 7c) eines Abstandssensors eine gemeinsame Sensorsteuerung (3) zugeordnet ist.

9. Steuersystem nach Anspruch 3 und ggf. nach einem der Ansprüche 4 bis 8, **dadurch gekennzeichnet, dass** den auf einer Seite der Fahrzeugkomponente angeordneten Sensormodulen (6b, 7b; 6c, 7c) der mindestens zwei Abstandssensoren (6, 7) eine gemeinsame Sensorsteuerung (3a, 3b) zugeordnet ist.

10. Steuersystem nach einem der vorhergehenden Ansprüche, **dadurch gekennzeichnet, dass** der Abstandssensor (6, 7) in oder an einem Karosseriebauteil (13), insbesondere in oder an einer Front-, Heck oder Seitenschürze anordenbar ist, vorzugsweise, dass sich der Abstandssensor (6, 7) mindestens über die wesentliche Breite des Karosseriebauteils (13) erstreckt.

11. Kraftfahrzeug mit einem motorischen Verschlusselement (1), insbesondere mit einer motorischen Heckklappe, einer motorischen Seitentür, einer motorischen Schiebetür o. dgl., und mit einem Steuersystem zur Ansteuerung des motorischen Verschlusselements (1) nach einem der vorhergehenden Ansprüche.

12. Verfahren für den Betrieb eines Steuersystems nach einem der Ansprüche 1 bis 10, wobei eine Benutzer-Längsbewegung entlang der Sensorerstreckung des mindestens einen Abstandssensors (6, 7) durch dessen Blindabschnitt (6a, 7a) ein Muster im zeitlichen Sensorsignalverlauf ergibt, das von dem Steuersystem zumindest als Teil eines Bedienereignisses erfasst wird.

## Claims

1. Control system for actuating a motorized closure element (1) of a motor vehicle, wherein in order to sense operator events at least one sensor controller (3) and at least one elongate distance sensor (6, 7) extending along a sensor extent are provided, wherein the sensor controller (3) actuates the assigned distance sensor (6, 7) and/or evaluates its sensor signals, and wherein the distance sensor (6, 7) senses a distance (a) from a user (B),
**characterized**
**in that** when there is a control system installed a vehicle component (8), in particular a trailer hitch or the like, is arranged or can be arranged in or along the sensor extent, in that the distance sensor (6, 7) is configured in such a way that it has a blind section (6a, 7a) in the region of the vehicle component (8), which blind section (6a, 7a) does not have any sensitivity or has lower sensitivity compared with the region of the distance sensor (6, 7) which adjoins the blind section (6a, 7a), and in that the blind section (6a, 7a) is an interruption in the distance sensor (6, 7) along the sensor extent, so that a sensor module (6b, 6c, 7b, 7c) is arranged on each side of the vehicle component (8).

2. Control system according to Claim 1, **characterized in that** because of the blind section (6a, 7a) the vehicle component (8) cannot be sensed by the distance sensor (6, 7) and does not bring about any disruption in the sensing of the distance (a) from a user (B) by sensor.

3. Control system according to Claim 1 or 2, **characterized in that** at least two elongate distance sensors (6, 7) which extend essentially in parallel with one another are provided.

4. Control system according to one of the preceding claims, **characterized in that** the at least one distance sensor (6, 7) is configured as a capacitive sensor with an elongate measuring electrode (9-12).

5. Control system according to one of the preceding claims, **characterized in that** the extent of the blind section (6a, 7a) along the sensor extent is at least 5% preferably at least 10%, of the overall length of the distance sensor (6, 7).

6. Control system according to one of the preceding claims, **characterized in that** the blind section (6a, 7b) has a screen which screens the region of the vehicle component (8) from the sensing by sensor.

7. Control system according to one of the preceding claims, **characterized in that** the sensor modules (6b, 6c, 7b, 7c), which are arranged on each side of the vehicle component (8), of a distance sensor (6, 7) are placed electrically in contact with one another.

8. Control system according to one of the preceding claims, **characterized in that** the sensor modules (6b, 6c, 7b, 7c), which are arranged on each side of the vehicle component (8) of a distance sensor (6, 7) are each assigned a separate sensor controller (3), or **in that** the sensor modules (6b, 6c, 7b, 7c), which are arranged on each side of the vehicle component (8), of a distance sensor are assigned a common sensor controller (3).

9. Control system according to Claim 3 and, if appropriate, according to one of Claims 4 to 8, **characterized in that** the sensor modules (6b, 7b; 6c, 7c), which are arranged on one side of the vehicle component, of the at least two distance sensors (6, 7) are assigned a common sensor controller (3a, 3b).

10. Control system according to one of the preceding claims, **characterized in that** the distance sensor (6, 7) can be arranged in or on a vehicle bodywork component (13), in particular in or on a front apron, rear apron or side apron, preferably **in that** the distance sensor (6, 7) extends at least over the main width of the vehicle bodywork component (13).

11. Motor vehicle having a motorized closure element (1), in particular having a motorized tail gate, a motorized side door, a motorized sliding door or the like, and having a control system for actuating the motorized closure element (1) according to one of the preceding claims.

12. Method for operating a control system according to one of Claims 1 to 10, wherein a user longitudinal movement along the sensor extent of the at least one distance sensor (6, 7) through the blind section (6a, 7a) thereof results in a pattern in the chronological sensor signal profile which is sensed by the control system at least as part of an operator event.

## Revendications

1. Système de commande destiné à commander un élément de fermeture motorisé (1) d'un véhicule automobile, au moins une commande de capteur (3) et au moins un capteur de distance allongé (6, 7), qui s'étend le long d'une extension de capteur, étant prévus pour détecter des événements d'exploitation, la commande de capteur (3) commandant le capteur de distance (6, 7) associé et/ou évaluant ses signaux de capteur et le capteur de distance (6, 7) détectant une distance (a) par rapport à un utilisateur (B),
**caractérisé en ce que**
lorsque le système de commande est installé, un composant de véhicule (8) est disposé ou peut être disposé dans ou le long de l'extension de capteur, en particulier un attelage de remorque ou similaire, **en ce que** le capteur de distance (6, 7) est conçu de manière à avoir dans la région du composant de véhicule (8) une partie aveugle (6a, 7a) qui ne présente aucune sensibilité ou qui présente une sensibilité inférieure à celle de la région du capteur de distance (6, 7) qui est adjacente à la partie aveugle (6a, 7a) et **en ce que** la partie aveugle (6a, 7a) est une interruption du capteur de distance (6, 7) le long de l'extension de capteur de sorte qu'un module de capteur (6b, 6c, 7b, 7c) soit disposé des deux côtés du composant de véhicule (8).

2. Système de commande selon la revendication 1, **caractérisé en ce qu'**en raison de la partie aveugle (6a, 7a), le composant de véhicule (8) n'est pas détectable par le capteur de distance (6, 7) et aucune perturbation de la détection par capteur de la distance (a) n'est causée à un utilisateur (B).

3. Système de commande selon la revendication 1 ou 2, **caractérisé en ce qu'**au moins deux capteurs de distance allongés (6, 7) sont prévus qui s'étendent sensiblement parallèlement l'un à l'autre.

4. Système de commande selon l'une des revendications précédentes, **caractérisé en ce que** l'au moins un capteur de distance (6, 7) est conçu comme un capteur capacitif comprenant une électrode de mesure allongée (9-12).

5. Système de commande selon l'une des revendications précédentes, **caractérisé en ce que** l'extension de la partie aveugle (6a, 7a) le long de l'extension du capteur représente au moins 5 %, de préférence au moins 10 %, de la longueur totale du capteur de distance (6, 7) .

6. Système de commande selon l'une des revendications précédentes, **caractérisé en ce que** la partie aveugle (6a, 7b) comporte un blindage qui empêche la détection par capteur de la région du composant de véhicule (8).

7. Système de commande selon l'une des revendications précédentes, **caractérisé en ce que** les modules capteurs (6b, 6c, 7b, 7c), qui sont disposés des deux côtés du composant de véhicule (8), d'un capteur de distance (6, 7) sont en contact électrique les uns avec les autres.

8. Système de commande selon l'une des revendications précédentes, **caractérisé en ce que** les modules de capteur (6b, 6c, 7b, 7c), disposés des deux côtés du composant de véhicule (8), d'un capteur de distance (6, 7) sont associés à une commande de capteur (3) séparée ou **en ce que** les modules de capteur (6b, 6c, 7b, 7c) d'un capteur de distance, qui sont disposés des deux côtés du composant de véhicule (8), sont associés à une commande de capteur (3) commune.

9. Système de commande selon la revendication 3 et éventuellement selon l'une des revendications 4 à 8, **caractérisé en ce que** les modules de capteur (6b, 7b, 6c, 7c), disposés des deux côtés du composant de véhicule, des au moins deux capteurs de distance (6, 7) sont associés à une commande de capteur (3a, 3b) commune.

10. Système de commande selon l'une des revendications précédentes, **caractérisé en ce que** le capteur de distance (6, 7) peut être disposé dans ou sur un composant de carrosserie (13), en particulier dans ou sur une jupe avant, arrière ou latérale, de préférence **en ce que** le capteur de distance (6, 7) s'étend au moins sensiblement sur la largeur du composant de carrosserie (13).

11. Véhicule automobile comprenant un élément de fermeture motorisé (1), en particulier un hayon motorisé, une porte latérale motorisée, une porte coulissante motorisée ou un système de commande destiné à commander l'élément de fermeture motorisé (1) selon l'une des revendications précédentes.

12. Procédé de fonctionnement d'un système de commande selon l'une des revendications 1 à 10, un mouvement longitudinal de l'utilisateur le long de l'extension de capteur de l'au moins un capteur de distance (6, 7) à travers la partie aveugle (6a, 7a) de celui-ci a pour résultat, dans la variation dans le temps du signal de capteur temporel, un motif qui est détecté par le système de commande au moins comme partie d'un événement d'exploitation.
